# EUROPÄISCHE PATENTSCHRIFT

(11) **EP 2 391 540 B1**
(45) Veröffentlichungstag und Bekanntmachung des Hinweises auf die Patenterteilung: **04.04.2018**
(21) Anmeldenummer: 10701826.9
(22) Anmeldetag: 28.01.2010
(51) Int. Cl.: B64D 11/06

(54) **SITZ FÜR EIN VERKEHRSMITTEL**
SEAT FOR A TRANSPORT MEAN
SIEGE POUR UN MOYEN DE TRANSPORT

(30) Priorität: 30.01.2009 DE 102009006758
(43) Veröffentlichungstag der Anmeldung: 07.12.2011
(73) Patentinhaber: Lufthansa Technik AG, 22335 Hamburg (DE)
(72) Erfinder: MERENSKY, Harald, 22359 Hamburg (DE); KAHABKA, Stefan, 55276 Oppenheim (DE); MUIRHEAD, Andrew, 22848 Norderstedt (DE)
(74) Vertreter: Glawe, Delfs, Moll
(86) Internationale Anmeldenummer: PCT/EP2010/000524
(87) Internationale Veröffentlichungsnummer: WO 2010/086168

(56) Entgegenhaltungen:
- US-A1- 2002 105 219
- US-A1- 2004 160 092
- US-A1- 2004 212 228
- US-B1- 6 179 381
- US-B1- 6 802 568

## Beschreibung

Die Erfindung betrifft einen Sitz für ein Verkehrsmittel, mit einer Tragstruktur, an der Sitzfläche und Rückenlehne befestigt sind, und mit einem hohl ausgebildeten Sitzholm.

In Verkehrsmitteln wie Bussen, Eisenbahnen und insbesondere Flugzeugen wird ein zunehmend differenziertes Angebot insbesondere an Video- und/oder Audiounterhaltung für die Passagiere bereitgehalten. Dabei hat sich weitgehend ein vom Passagier personalisierbares Angebot für jeden einzelnen Sitz zum Standard entwickelt. Dieses sogenannte Audio on demand oder Video on demand erfordert eine dem Sitz zugeordnete Steuerelektronik. Ferner wird Passagieren zunehmend eine Infrastruktur für die Verwendung von Computern und PDAs (Personal Digital Assistants) angeboten, die insbesondere eine Stromversorgung und/oder drahtgebundene oder drahtlose Netzwerkzugänge umfassen kann. Auch die Steuerung des Sitzes und/oder der Sitzumgebung (Beleuchtung, Klimatisierung etc.) erfordert die Anordnung der entsprechenden elektrischen und/oder elektronischen Komponenten.

US 6 179 381 B1 offenbart eine Sitzanordnung für Theaterräume, bei der elektrische Leitungen durch Bereiche der Rückwand verlaufen. Zudem offenbart US 2004/0212228 A1 Sitzelektronikeinheiten, welche im Hohlraum eines Sitzholms angeordnet sind. Weiterhin ist aus der US 2002/0105219 A1 die Anordnung eines Druckluftbehälters sowie eines Druckluftauslösers innerhalb des Hohlraums eines Sitzholms bekannt.

Der Erfindung liegt die Aufgabe zugrunde, einen Sitz der eingangs genannten Art zu schaffen, der eine entsprechende Funktionalität für das sogenannte Entertainment und/oder eine Infrastruktur für elektronische Geräte des Passagiers mit gutem Sitzkomfort verbindet.

Die Erfindung löst diese Aufgabe dadurch, dass in dem Hohlraum des Sitzholms als Module ausgebildete elektrische und/oder elektronische Komponenten angeordnet sind, die sich von einer Stirnseite des entsprechenden Sitzholms in einen im Wesentlichen in Längsrichtung des Sitzholms verlaufenden Hohlraum einschieben lassen, dadurch gekennzeichnet, dass Wärmeleitbrücken zur Wärmeübertragung von den elektrischen und/oder elektronischen Komponenten auf den Sitzholm und/oder die Tragstruktur des Sitzes vorgesehen sind, wobei die Module an Stirnseiten elektrische und/ oder mechanische Verbindungen aufweisen, mittels denen sie in ihrer Einbaustellung elektrisch und/oder mechanisch verbunden sind und wobei die elektrischen und/oder mechanischen Verbindungen im verbundenen Zustand auf Zug belastbar sind, um ein gemeinsames Herausziehen einer Mehrzahl von Modulen aus einem Sitzholm zu ermöglichen. Zunächst seien einige im Rahmen der Erfindung verwendete Begriffe erläutert. Bei einem Verkehrsmittel handelt es sich bevorzugt um öffentliche Verkehrsmittel wie Flugzeuge, schienengebundene Fahrzeuge oder Busse. Die Tragstruktur eines Sitzes sind diejenigen Elemente, die dem Sitz Stabilität verleihen und die Last in den Untergrund (in den meisten Fällen den Boden des Verkehrsmittels) ableiten. Beispielsweise weist die Tragstruktur eines gängigen Flugzeugsitzes Sitzbeine, sogenannte Sitzteiler sowie Sitzholme auf. Die Sitzbeine sind auf dem Kabinenboden montiert. Die Sitzteiler sind in Blickrichtung eines auf dem Sitz sitzenden Passagiers in Längsrichtung verlaufende tragende Elemente, die die oberen Endbereiche der Sitzbeine miteinander verbinden und an denen die Sitzflächen montiert und die Rückenlehnen angelenkt sind. Der Sitzholm stellt ein quer verlaufendes Verbindungselement dar, über das Sitzteiler und Sitzbeine untereinander bzw. miteinander verbunden sind. Übliche Sitzholme sind in der Regel hohl und eignen sich damit zur erfindungsgemäßen Unterbringung der elektrischen und/oder elektronischen Komponenten. In der Regel ist ein Sitzholm aus Metall wie beispielsweise Aluminium hergestellt, Sitzholme aus Kohlefaserwerkstoff oder sonstigen faserverstärkten Polymeren sind ebenfalls verwendbar. Bei der Erfindung wird dieses im Stand der Technik ungenutzte Volumen des hohlen Sitzholms für die Unterbringung der elektrischen und/oder elektronischen Komponenten oder Teilen davon (beispielsweise Komponenten zur Stromversorgung und Verteilung von Audio-, Video- bzw. Netzwerkdaten) genutzt. Bei der Erfindung ist somit ein hohl ausgebildeter Sitzholm vorhanden, in dessen Hohlraum wenigstens ein Teil der elektrischen und/oder elektronischen Komponenten eingebracht werden kann.

Im Rahmen der Erfindung kann der Hohlraum (wie beispielsweise bei zylindrischen Hohlräumen) in Radialrichtung rundum geschlossen sein und lediglich an den axialen Stirnseiten Öffnungen aufweisen; alternativ kann es sich um einen halb offenen Hohlraum wie beispielsweise im Querschnitt U-förmigen Hohlraum im Sitzholm handeln. Erfindungsgemäß kann ein Sitzholm zwei oder mehr voneinander räumlich getrennte Hohlräume aufweisen, die im Rahmen der Erfindung ganz oder teilweise zur Aufnahme elektrischer und/oder elektronischer Komponenten genutzt werden können.

Die Erfindung hat erkannt, dass sich Hohlräume des Sitzholms in vorteilhafter Weise nutzen lassen zur Unterbringung der elektrischen und/oder elektronischen Komponenten. Damit werden zwei wichtige Vorteile erzielt. Zum einen werden die Komponenten platzsparend untergebracht, ohne in irgendeiner Weise den Sitzkomfort zu beeinträchtigen. Insbesondere in der Economy Class von üblichen Langstreckenflugzeugen sind Sitz- und Fußraum recht knapp bemessen, so dass die im Stand der Technik übliche Unterbringung der Komponenten in sogenannten Seat Electronic Boxes unterhalb eines Sitzes den Fußraum für die Passagiere deutlich einschränken kann. Zum zweiten erlaubt die Unterbringung der Komponenten in Hohlräumen der vorzugsweise im wesentlichen aus Metall bestehenden Sitzholme, dass eine effektive Kühlung der Komponenten durch die Wärmeableitung in die vorzugsweise aus Metall bestehende Tragstruktur erfolgen kann; ggf. können hier zusätzlich weitere Kühlmaßnahmen vorgesehen sein.

Der Begriff "elektrische und/oder elektronische Komponenten" ist umfassend zu verstehen und beinhaltet alle Komponenten, die bspw. zur Stromversorgung, Datenübertragung, Steuerung oder dergleichen des Sitzes oder der Sitzumgebung (bspw. Beleuchtung, Klimatisierung oder dergleichen) oder von elektrischen und/oder elektronischen Geräten, die dem Sitz oder der Sitzumgebung zugeordnet sind oder die vom Passagier auf der Reise mitgeführt werden, dienen.

Die Komponenten sind vorzugsweise ausgewählt aus der Gruppe bestehend aus:
a) aktiven elektronischen Komponenten,
b) passiven elektronischen Komponenten,
c) Komponenten, die im Betrieb Wärme abgeben,
d) Komponenten zur Stromversorgung,
e) Komponenten zur elektronischen Datenverarbeitung.

"Aktiv" und "passiv" hat die in der Elektronik übliche Bedeutung. Komponenten, die im Betrieb Wärme abgeben, haben eine thermische Verlustleistung, die die Verlustleistung eines üblichen elektrischen Leiters (bspw. Stromversorgungskabels) übersteigt. Komponenten zur Stromversorgung umfassen alle Bauteile und Einrichtungen zur Weiterleitung, Verteilung und Umwandlung (bspw. Spannungswandlung) elektrischer Energie. Erfindungsgemäß kann es sich insbesondere um Komponenten zur Stromversorgung von Steckdosen (Power-Outlet) im Sitz oder Sitzumfeld (bspw. in der Armlehne) und/oder von im Sitz integrierten und/oder dem Sitz zugeordneten Komponenten handeln. Komponenten zur elektronischen Datenverarbeitung umfassen alle Bauteile und Einrichtungen zur Weiterleitung, Verteilung und Umwandlung von Datenströmen, bspw. Bauteile für drahtlose oder drahtgebundene Netzwerke, Audio- und/oder Videodaten oder dergleichen. Komponenten können mehreren der genannten Gruppen zugehörig sein; so sind bspw. viele Netzwerkkomponenten aktive Bauteile, die im Betrieb Wärme abgeben. Dem Sitz kann eine Ausgabeeinheit für Video- und/oder Audiosignale zugeordnet sein. Bei dieser Ausgabeeinheit kann es sich insbesondere um Videodisplays oder Anschlüsse für Kopfhörer oder dergleichen handeln. Zuordnung bedeutet, dass die entsprechende Ausgabeeinheit einem einzelnen Sitz oder ggf. einer Gruppe von Sitzen zugeordnet ist und von einem Passagier auf diesem Sitz angesteuert oder auf sonstige Weise beeinflusst werden kann. Beispielsweise kann ein Videodisplay, das einem bestimmten Sitz zugeordnet ist, aus einer Armlehne des Sitzes herausgeklappt werden, es kann in der Rückenlehne des Vordersitzes angebracht sein oder es kann beispielsweise ausklappbar an der Kabinendecke angeordnet sein.

Der Sitz weist bei dieser Ausführungsform elektronische Steuerkomponenten zur Ansteuerung und/oder Stromversorgung der Ausgabeeinheit auf. Mit diesem Begriff werden jegliche elektrische und elektronische Komponenten bezeichnet, die entweder Steuersignale des Passagiers übermitteln oder verarbeiten, die eine Ausgabeeinheit beispielsweise aus dem Bordnetz mit Spannung versorgen oder mittels denen beispielsweise ein vom Passagier ausgewählter Videofilm oder eine Audioeinheit wiedergegeben, d.h. an die Ausgabeeinheit ausgegeben werden. Dabei können die Steuerkomponenten die entsprechenden Video- bzw. Audiosignale entweder selbst gespeichert für eine Auswahl durch den Passagier bereithalten oder nach einer entsprechenden Auswahl durch den Passagier eine Verbindung beispielsweise zu einem Zentralrechner des Verkehrsmittels herstellen, der die entsprechenden Video- und/oder Audiosignale bereithält. Erfindungsgemäß ist bei dieser bevorzugten Ausführungsform wenigstens ein Teil der elektronischen Steuerkomponenten in dem Hohlraum des Sitzholms angeordnet.

Wie bereits geschildert, können der Sitzholm mit den darin befindlichen elektrischen und/oder elektronischen Komponenten sowie angrenzende Bauteile der Tragstruktur der Wärmeabfuhr dienen. Es können zusätzliche Kühleinrichtungen wie beispielsweise Kühlrippen und/oder -flächen an der Außenseite der entsprechenden Tragstrukturelemente (insbesondere der Sitzholme) und/oder Kühlöffnungen in einer Außenfläche der Tragstrukturelemente vorgesehen sein. Ferner können Mittel zur Zwangsbelüftung des Hohlraums wie beispielsweise Ventilatoren vorgesehen sein. Bei einem hohlen Sitzholm kann beispielsweise ein Ventilator an einem Axialende des Sitzholms vorgesehen sein, der eine Zwangsbelüftung über die gesamte Holmlänge bewirkt. Erfindungsgemäß sind Wärmeleitbrücken zur Wärmeübertragung von den elektrischen und/oder elektronischen Komponenten auf den Sitzholm und/oder die Tragstruktur des Sitzes vorgesehen. Eine solche Wärmeleitbrücke kann bspw. als gut wärmeleitende Schiene (bspw. aus Metall) ausgebildet sein, die einen guten Flächenkontakt zu den Komponenten einerseits und Flächen des Sitzholms und/oder der Tragstruktur andererseits herstellt. Solche Wärmeleitbrücken können auch dann eine verbesserte Wärmeabfuhr bewirken, wenn Sitzholm, Tragstruktur oder Teile davon aus weniger gut wärmeleitenden Materialien wie bspw. faserverstärktem Kunststoff bestehen. Zur weiteren Verbesserung der Wärmeleitung kann Wärmeleitpaste bspw. auf der Kontaktfläche zwischen Komponenten und Wärmeleitbrücke vorgesehen sein.

Die elektrischen und/oder elektronischen Komponenten sind als Module ausgebildet, die sich von einer Stirnseite des entsprechenden Sitzholms in einen im Wesentlichen in Längsrichtung des Sitzholms verlaufenden Hohlraum einschieben lassen. Durch diese Modulbauweise ist insbesondere eine effiziente Ausnutzung des Hohlraums von Sitzholmen sogenannter Sitzgruppen möglich. Beispielsweise werden in der Economy Class von Flugzeugen typischerweise Sitzgruppen von zwei bis fünf nebeneinander angeordneten Sitzen gebildet, die einen gemeinsamen in Querrichtung verlaufenden Sitzholm aufweisen können, der dementsprechend eine beträchtliche Länge aufweisen kann. In einen solchen Sitzholm können von einer Stirnseite her mehrere Module hintereinander eingeschoben und somit dieser Hohlraum weitgehend genutzt werden.

Die Module weisen erfindungsgemäß an den Stirnseiten elektrische und/oder mechanische Verbindungen auf, mittels denen sie in ihrer Einbaustellung elektrisch und/oder mechanisch verbunden sind. Es kann sich bspw. um Steckverbindungen handeln, mittels denen zwei oder mehr Module zu einer mechanisch und elektrisch verbundenen Einheit zusammengefügt werden können. Die elektrischen und/oder mechanischen Verbindungen sind erfindungsgemäß im verbundenen Zustand auf Zug belastbar, um ein gemeinsames Herausziehen einer Mehrzahl von Modulen aus einem Sitzholm zu ermöglichen. Das Herausziehen kann bspw. mittels eines Werkzeugs erfolgen, das mit einer mechanischen Verbindung an der Stirnseite eines Moduls einrastet oder verriegelt, bspw. mittels einer Klickverbindung. Somit weist bevorzugt wenigstens ein Modul an wenigstens einer Stirnseite eine mechanische Verriegelungsmöglichkeit mit einem zum Herausziehen des Moduls aus einem Sitzholm ausgebildeten Werkzeug auf.

Erfindungsgemäß kann vorgesehen sein, dass die Module beim Einschieben zwangsläufig eine Winkelstellung einnehmen, bei der die Verbindungen an den Stirnseiten der Module zueinander passend ausgerichtet sind. Bspw. Können Module und Innenraum des Holms einen Querschnitt aufweisen, der von der Zylinderform abweicht und einen (ggf. teilweisen) Formschluss aufweisen; oder es können Führungsschienen vorgesehen sein, die eine bestimmte Winkelstellung sicherstellen.

Gegenstand der Erfindung ist ferner eine Sitzanordnung, die zwei oder mehr nebeneinander angeordnete erfindungsgemäße Sitze aufweist. Sie kann gemeinsame Tragstrukturelemente aufweisen, wie beispielsweise den bereits beschriebenen gemeinsamen Sitzholm.

Ein Ausführungsbeispiel der Erfindung wird im Folgenden anhand der Zeichnungen beschrieben. Darin zeigen:

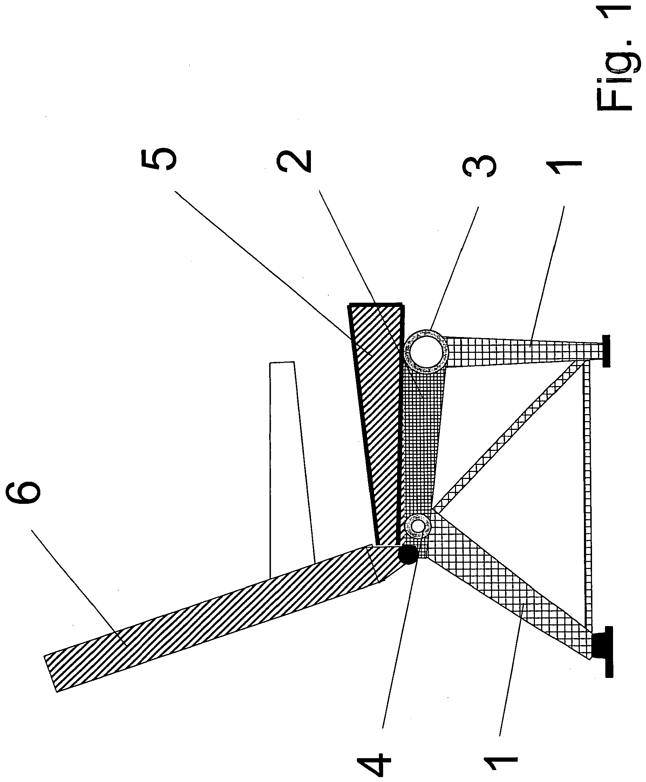

- Fig. 1:: einen erfindungsgemäßen Sitz in einer teilweise geschnittenen Ansicht von der Seite;
- Fig. 2:: schematisch die Ansicht einer Dreiersitzgruppe von vorne;
- Fig. 3:: schematisch in einer teilweise geschnittenen Draufsicht den Sitzholm mit darin angeordneten Steuerkomponenten;
- Fig. 4:: in einer Detailansicht den entsprechenden Sitzholm;
- Fig. 5:: schematisch den Einsatz einer Wärmeleitbrücke.

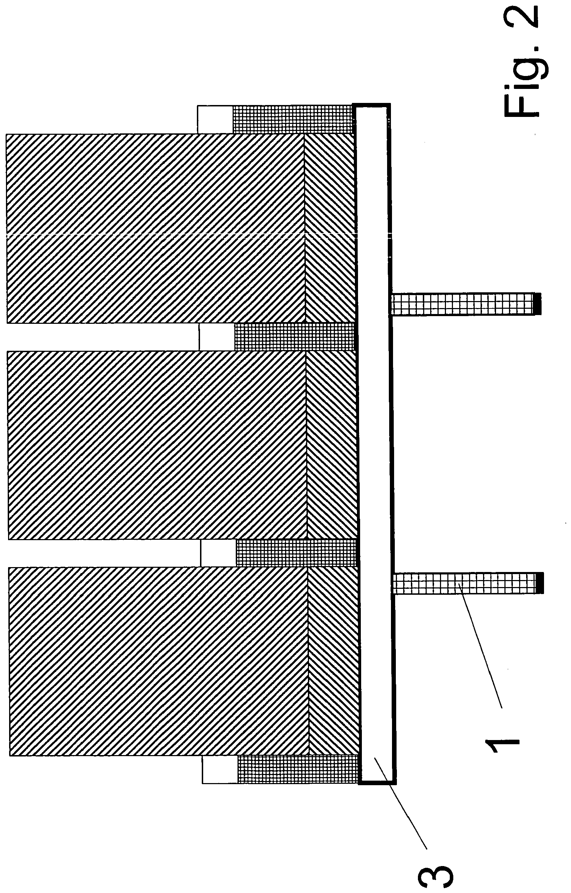

Ein Flugzeugsitz weist Sitzbeine 1 sowie in Längsrichtung verlaufende Sitzteiler 2 auf. Die Querverbindung zwischen Sitzbeinen 1 und Sitzteilern 2 wird mittels eines vorderen hohlen Hauptholms 3 (ein erster Sitzholm) sowie eines hinteren hohlen Sitzholms 4 hergestellt. Wie in Figur 2 zu erkennen ist, erstreckt sich der Hauptholm 3 in Querrichtung über eine Gruppe von drei nebeneinander angeordneten Sitzen. An den Sitzteilern 2 sind Sitzflächen 5 montiert und Rückenlehnen 6 angelenkt.

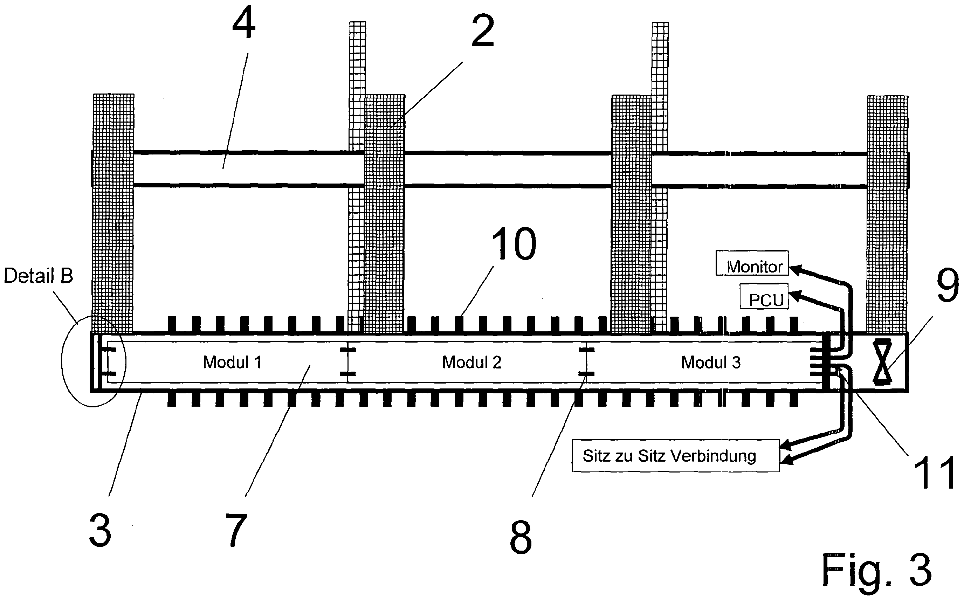

Wie in Figur 3 zu erkennen ist, sind im Hohlraum des Hauptholms 3 drei Module elektronischer Steuerkomponenten angeordnet. Es handelt sich um im Wesentlichen zylinderförmige Module, die den Hohlraum weitgehend ausfüllen und die an ihren Stirnseiten mittels bei 8 angedeuteter Steckverbindungen elektrisch und mechanisch miteinander verbunden sind. Diese Steckverbindungen können durch Zusammenschieben einrastende Klickverbindungen sein, die nach dem Zusammenfügen auf Zug belastbar sind. Die genannten Module tragen die Bezugsziffer 7. Ein bei 9 angedeutetes Gebläse dient der Zwangsbelüftung des Hohlraums im Hauptholm 3 und somit der Kühlung der Module 7. Ferner sind an den Außenflächen des Hauptholms 3 zusätzliche Kühlrippen 10 zur Verbesserung der Wärmeabfuhr vorgesehen.

Die elektrischen Anschlüsse der Module 7 sind bei 11 angedeutet. Es können hier insbesondere Verbindungen mit einem Videodisplay oder -monitor vorgesehen sein, zu einer Steuereinheit für den Passagier (Passenger Control Unit PCU) oder zum Bordnetz, zu einem Zentralrechner oder ggf. zu einer Datenbusleitung oder einem sonstigen kabelgebundenen oder ggf. kabellosen Netzwerk des Verkehrsmittels.

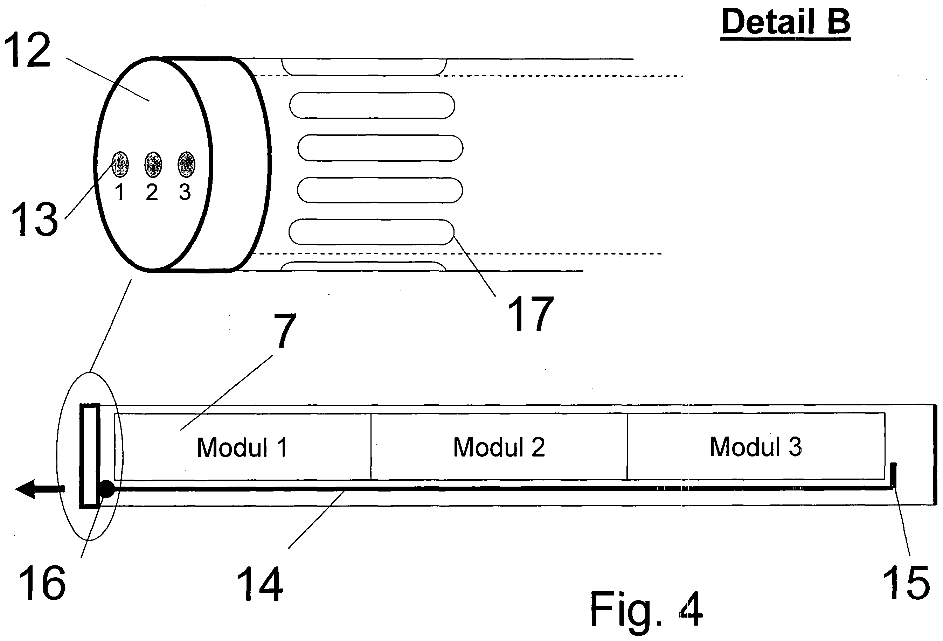

Figur 4 zeigt einige Details der Unterbringung der Module mit elektronischen Steuerkomponenten im Hauptholm 3. Auf dem in Figur 3 linken Ende des Hauptholms 3 ist eine Endkappe 12 angeordnet, die den entsprechenden Hohlraum des Hauptholms 3 stirnseitig abschließt und die bei Bedarf bei 13 angedeutete Statusanzeigen (beispielsweise LEDs) zur Überprüfung der ordnungsgemäßen Funktion der Module 7 aufweisen kann. Die Endkappe 12 kann eine auf die Stirnfläche des ihr unmittelbar benachbarten Moduls 7 zuweisende Federeinrichtung (bspw. eine Spiralfeder vergleichbar wie bei einer Verschlusskappe des Batteriefachs einer Taschenlampe), die beim Verschließen eine in Axialrichtung des Holms 3 wirkende Kraft auf die Module 7 aufbringt und so ein sicheres Zusammenfügen bzw. eine sichere Verbindung unterstützt.

Die Endkappe 12 ist abnehmbar, nach dem Abnehmen können die Module 7 aus dem Hauptholm 3 herausgezogen werden. Um das Herausziehen zu erleichtern, kann eine Vorrichtung wie beispielsweise ein sich über die Länge des Hauptholms 3 erstreckender Draht 14 vorgesehen sein, der die gesamte Modulgruppe bei 15 hintergreift und einen Handgriff 16 aufweist. An diesem Handgriff 16 kann der Draht 14 mit den gesamten Modulen 7 herausgezogen werden, so dass diese gewartet oder ausgetauscht werden können. In Figur 4 sind noch Lüftungsschlitze 17 dargestellt, durch die vom Ventilator 9 in den Hohlraum des Sitzholms 3 eingebrachte Kühlluft wieder entweichen kann.

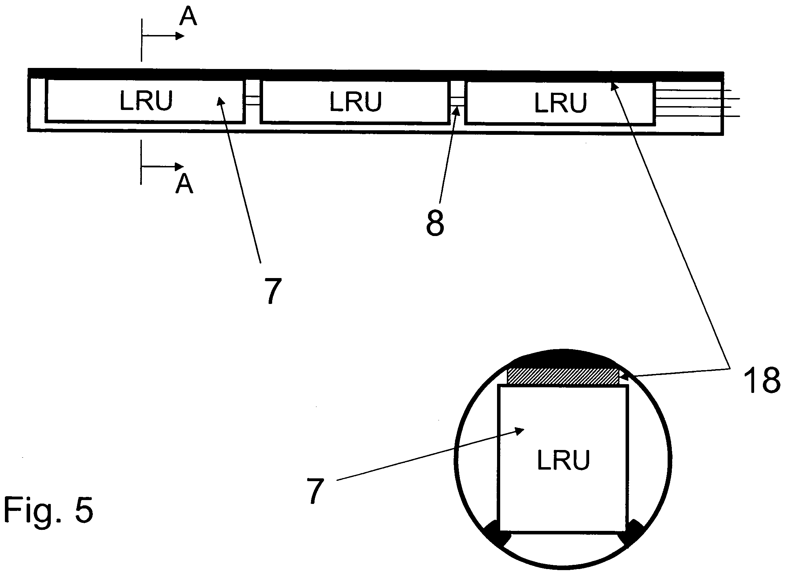

Fig. 5 zeigt, wie insbesondere bei abweichenden Querschnitten von Modulen 7 (in diesem Ausführungsbeispiel etwa quadratisch) und Hauptholm 3 die für eine Wärmeabfuhr zur Verfügung stehende Kontaktfläche mittels einer als Schiene ausgebildeten Wärmeleitbrücke 18 vergrößert werden kann.

## Patentansprüche

1. Sitz für ein Verkehrsmittel, mit einer Tragstruktur (1, 2, 3, 4), an der Sitzfläche (5) und Rückenlehne (6) befestigt sind, und mit einem hohl ausgebildeten Sitzholm (3, 4), wobei in dem Hohlraum des Sitzholms (3, 4) als Module (7) ausgebildete elektrische und/oder elektronische Komponenten (7) angeordnet sind, die sich von einer Stirnseite des entsprechenden Sitzholms (3) in einen im Wesentlichen in Längsrichtung des Sitzholms (3) verlaufenden Hohlraum einschieben lassen, **dadurch gekennzeichnet, dass** Wärmeleitbrücken zur Wärmeübertragung von den elektrischen und/oder elektronischen Komponenten (7) auf den Sitzholm (3,4) und/oder die Tragstruktur des Sitzes vorgesehen sind, wobei die Module (7) an Stirnseiten elektrische und/oder mechanische Verbindungen (8) aufweisen, mittels denen sie in ihrer Einbaustellung elektrisch und/oder mechanisch verbunden sind und wobei die elektrischen und/oder mechanischen Verbindungen (8) im verbundenen Zustand auf Zug belastbar sind, um ein gemeinsames Herausziehen einer Mehrzahl von Modulen (7) aus einem Sitzholm (3) zu ermöglichen.

2. Sitz nach Anspruch 1, **dadurch gekennzeichnet, dass** die elektrischen und/oder elektronischen Komponenten (7) ausgewählt sind aus der Gruppe bestehend aus:
a) aktiven elektronischen Komponenten,
b) passiven elektronischen Komponenten,
c) Komponenten, die im Betrieb Wärme abgeben,
d) Komponenten zur Stromversorgung,
e) Komponenten zur elektronischen Datenverarbeitung.

3. Sitz nach Anspruch 1 oder 2, **dadurch gekennzeichnet, dass** er eine dem Sitz zugeordnete Ausgabeeinheit für Video- und/oder Audiosignale und elektronische Steuerkomponenten (7) zur Ansteuerung und/oder Stromversorgung der Ausgabeeinheit aufweist, wobei wenigstens ein Teil der elektronischen Steuerkomponenten (7) in dem Hohlraum des Sitzholms (3, 4) angeordnet ist.

4. Sitz nach einem der Ansprüche 1 bis 3, **dadurch gekennzeichnet, dass** der Sitzholm (3, 4) mit darin angeordneten elektronischen Komponenten (7) Kühleinrichtungen (9, 10, 17) aufweist.

5. Sitz nach Anspruch 4, **dadurch gekennzeichnet, dass** die Kühleinrichtungen Kühlrippen und/oder -flächen (10) an der Außenseite des Sitzholms (3) und/oder Kühlöffnungen (17) in einer Außenfläche des Sitzholms (3) umfassen.

6. Sitz nach Anspruch 4 oder 5, **dadurch gekennzeichnet, dass** die Kühleinrichtungen Mittel (9) zur Zwangsbelüftung des Hohlraums umfassen.

7. Sitz nach einem der Ansprüche 1 bis 6, **dadurch gekennzeichnet, dass** wenigstens ein Modul (7) an wenigstens einer Stirnseite eine mechanische Verriegelungsmöglichkeit mit einem zum Herausziehen des Moduls (7) aus einem Sitzholm (3) ausgebildeten Werkzeug aufweist.

8. Sitzanordnung, **dadurch gekennzeichnet, dass** sie zwei oder mehr nebeneinander angeordnete Sitze nach einem der Ansprüche 1 bis 7 aufweist.

9. Sitzanordnung nach Anspruch 8, **dadurch gekennzeichnet, dass** sie wenigstens einen sich über zwei oder mehr Sitze erstreckenden gemeinsamen Sitzholm (3, 4) aufweist.

## Claims

1. Seat for a means of transport, having a supporting structure (1, 2, 3, 4), on which seating surface (5) and backrest (6) are mounted, and having a seat crossbeam (3, 4) of hollow design, wherein the cavity of the seat crossbeam (3, 4) contains electrical and/or electronic components (7) in the form of modules (7) which can be pushed from one end of the relevant seat crossbeam (3) into a cavity which runs essentially in the longitudinal direction of the seat crossbeam (3), **characterized in that** heat-conducting bridges are provided for the transfer of heat from the electrical and/or electronic components (7) to the seat crossbeam (3, 4) and/or to the supporting structure of the seat, wherein ends of the modules (7) have electrical and/or mechanical connections (8) by means of which they are electrically and/or mechanically connected in their installation position, and wherein the electrical and/or mechanical connections (8) can be subjected to tensile load in the connected state in order to allow a plurality of modules (7) to be pulled out of a seat crossbeam (3) together.

2. Seat according to Claim 1, **characterized in that** the electrical and/or electronic components (7) are selected from the group comprising:
a) active electronic components,
b) passive electronic components,
c) components which emit heat during operation,
d) components for supplying power,
e) components for electronic data processing.

3. Seat according to Claim 1 or 2, **characterized in that** it has an output unit, associated with the seat, for video and/or audio signals and electronic control components (7) for actuating and/or supplying power to the output unit, wherein at least one portion of the electronic control components (7) is arranged in the cavity of the seat crossbeam (3, 4).

4. Seat according to one of Claims 1 to 3, **characterized in that** the seat crossbeam (3, 4) with electronic components (7) arranged therein has cooling devices (9, 10, 17).

5. Seat according to Claim 4, **characterized in that** the cooling devices comprise cooling ribs and/or surfaces (10) on the outside of the seat crossbeam (3) and/or cooling openings (17) in an outer surface of the seat crossbeam (3).

6. Seat according to Claim 4 or 5, **characterized in that** the cooling devices comprise means (9) for forced ventilation of the cavity.

7. Seat according to one of Claims 1 to 6, **characterized in that** at least one end of at least one module (7) has a mechanical locking option using a tool which is designed to pull the module (7) out of a seat crossbeam (3).

8. Seat arrangement, **characterized in that** it has two or more adjacently arranged seats according to one of Claims 1 to 7.

9. Seat arrangement according to Claim 8, **characterized in that** it has at least one common seat crossbeam (3, 4) which extends over two or more seats.

## Revendications

1. Siège pour un moyen de transport, doté d'une structure portante (1, 2, 3, 4), à laquelle sont fixés l'assise (5) et le dossier (6), et doté d'un longeron (3, 4) conçu creux, dans lequel des composants (7) électriques et/ou électroniques sont agencés en modules (7) dans l'espace creux du longeron (3, 4), et qui s'insèrent à partir d'une façade du longeron correspondant (3) dans un espace creux s'étendant essentiellement dans la longueur du longeron (3), **caractérisé en ce que** des ponts thermoconducteurs sont prévus pour transmettre la chaleur des composants électriques et/ou électroniques (7) au longeron (3, 4) et/ou à la structure portante du siège, dans lequel les modules (7) comportent sur les façades des connexions électriques et/ou mécaniques (8), au moyen desquelles ils sont raccordés électriquement et/ou mécaniquement dans leur position de montage et dans lequel les connexions électriques et/ou mécaniques (8) peuvent dans leur état raccordé être détachées par traction, afin de permettre une extraction commune d'une pluralité de modules (7) depuis un longeron (3).

2. Siège selon la revendication 1, **caractérisé en ce que** les composants électriques et/ou électroniques (7) sont sélectionnés dans les groupes consistant en :
a) composants électroniques actifs,
b) composants électroniques passifs,
c) composants dégageant de la chaleur en cours de fonctionnement,
d) composants pour l'alimentation électrique,
e) composants pour le traitement électronique des données.

3. Siège selon la revendication 1 ou 2, **caractérisé en ce qu'**il comporte un périphérique de sortie associé au siège pour le signal vidéo et/ou audio et des composants électroniques de commande (7) pour la commande et/ou l'alimentation électrique du périphérique de sortie, dans lequel un minimum d'une partie des composants électroniques de commande (7) est agencé dans l'espace creux du longeron (3, 4).

4. Siège selon l'une des revendications 1 à 3, **caractérisé en ce que** le longeron (3, 4) doté de composants électroniques (7) agencés à l'intérieur comporte des dispositifs de refroidissement (9, 10, 17).

5. Siège selon la revendication 4, **caractérisé en ce que** les dispositifs de refroidissement comprennent des ailettes et/ou des surfaces de refroidissement (10) sur la face extérieure du longeron (3) et/ou des ouvertures de refroidissement (17) sur une surface extérieure du longeron (3).

6. Siège selon la revendication 4 ou 5, caractérisé en ce les dispositifs de refroidissement comprennent un moyen (9) de ventilation forcée de l'espace creux.

7. Siège selon l'une des revendications 1 à 6, **caractérisé en ce qu'**un minimum d'un module (7) comporte sur un minimum d'une façade une possibilité de verrouillage mécanique dotée d'un outil conçu à partir d'un longeron (3) pour l'extraction du module (7).

8. Arrangement de sièges, **caractérisé en ce qu'**il comporte deux sièges selon l'une des revendications 1 à 7 ou plus, arrangés l'un à côté de l'autre.

9. Arrangement de sièges selon la revendication 8, **caractérisé en ce qu'**il comporte un minimum d'un longeron commun (3, 4) s'étendant sur deux sièges ou plus.
